# EUROPEAN PATENT APPLICATION

(11) **EP 4 555 848 A1**
(43) Date of publication of application: **21.05.2025**
(21) Application number: 23209821.0
(22) Date of filing: 14.11.2023
(51) Int. Cl.: A01D 34/73, F16B 39/32, B27B 5/32

(54) **RETAINING FASTENER, RETAINING SYSTEM, GARDEN MACHINE HAVING SAID RETAINING SYSTEM, AND METHOD OF OPERATION OF SAID RETAINING SYSTEM**

(71) Applicant: Techtronic Cordless GP, Anderson, SC 29621 (US)
(72) Inventor: Huang, Rong Wei, Dongguan (CN); Chen, You Liang, Dongguan (CN); Chung, Koon For, Hong Kong (HK); Wang, Yan Jia, Dongguan (CN)
(74) Representative: Zimmermann & Partner Patentanwälte mbB

(57) **Abstract**

According to aspects and embodiments of the present disclosure, a retaining system and a retaining fastener 200, 300, 400 for fastening at least one cutting blade 130a, 130b to a garden machine 100 is provided. The retaining fastener 200, 300, 400 is configured to be fastened to a cutting blade drive shaft 140 having a threaded portion 141 and a retaining feature 142, and further includes at least one locking element 210, 310, 410 which releasably engages with the retaining feature 142 in a fastened state, retaining the retaining fastener 200, 300, 400 in place. The retaining fastener further includes at least one actuation element 220, 320, 420 being coupled to the at least one locking element 210, 310, 410 such that the at least one locking element 210, 310, 410 can be disengaged from the retaining feature 142. According to further aspects and embodiments, a garden machine having said retaining system and a method of operating said retaining system are provided.

## Description

### FIELD

The present disclosure relates to retaining fasteners for securing a detachable cutting blade to a garden machine. Particularly, the present disclosure relates to retaining fasteners which can be fastened and released without tools, and which include means for preventing loosening or accidental release. Further, the present disclosure relates to a retaining system for fastening a cutting blade to a garden machine, a method of operating said retaining system, and a garden machine having said retaining system.

### BACKGROUND

Various configurations of power tools are commonly used in performing routine tasks in daily life. For example, power tools in the form of garden machines, such as lawn mowers, brush cutters, grass edgers, etc. are used every day by persons performing work and leisure related tasks. These power tools often comprise a motor of some form (e.g., electric motor or internal combustion motor) outputting power via a cutting drive shaft which drives an implement configured for the related task. As examples, a lawn mower may drive an implement in the form of a grass cutting blade, a brush cutter may drive an implement in the form of a multipurpose cutting blade, and a grass edger may drive an implement in the form of an edging blade.

Conventional garden machines, in particular lawn mowers, brush cutters and grass edgers, typically have one or more blades fixed to a rotating cutting blade shaft with a retaining fastener. The one or more blades are detachable so that the one or more blades can be unmounted from the lawn mower for sharpening, maintenance or replacement, or so that the configuration of the one or more blades can be changed. In conventional garden machines, the retaining fastener is typically a simple hex nut which is fastened and released with the use of a tool, such as a wrench. Without the use of a tool, sufficient holding torque may not be reached, and the retaining fastener may loosen, causing issues with safety and reliability. Furthermore, storing the tool on the garden machine can be difficult or impractical, as the tool requires an allocated storage space, and could be misplaced.

In view of the above, improvements to retaining fasteners for cutting blades in garden machines are sought. The present invention seeks to provide improvements to retaining fasteners and retaining systems for garden machines having one or more cutting blades. Improved reliability, durability, safety and cost-effectiveness is sought, as well as improvements in ergonomics and user operability.

### SUMMARY

In light of the above, a method and apparatuses for retaining fasteners for mower blades are provided according to the independent claims. Further aspects, advantages, and beneficial features are apparent from the dependent claims, the description, and the accompanying drawings.

According to a first aspect of the present disclosure, a retaining fastener for fastening at least one cutting blade to a cutting blade drive shaft is provided. The at least one cutting blade drive shaft includes a threaded portion and a retaining feature. The retaining fastener includes a housing defining an inner volume, a threaded portion provided on the housing, the threaded portion being configured for engaging with the corresponding threaded portion of the cutting blade drive shaft by relative rotation of the retaining fastener in a fastening direction, at least one locking element provided within the inner volume, the at least one locking element being configured to releasably engage with the retaining feature when the retaining fastener is in a fastened state, limiting rotation of the retaining fastener in the direction opposite to the fastening direction, and at least one actuation element being coupled to the at least one locking element such that the at least one locking element can be disengaged from the retaining feature.

The present disclosure allows for mounting and unmounting of cutting blades or other implements to the garden machine to be made more convenient and easier. A toolless solution is provided in which the application of holding torque of a user is sufficient to mount and unmount blades without requiring additional tools. Yet, the retaining fastener as disclosed herein is prevented from loosening or accidentally releasing and thus also provides a safe solution.

Particularly in the case of garden machines having cutting blades, the cutting blades are typically operated at a high rotational speed and with high energy, imparting high dynamic loads to the drive shaft of the garden machine and to the retaining fastener retaining the cutting blades. A high-speed rotating blade can be dangerous if not adequately fastened to the garden machine as it is provided by the present disclosure. By comparison, alternative cutting means known in the field, such as a cutting string used on a string trimmer, are comparatively low-weight and low-energy, and the dynamic loads applied to a retaining system for a string trimmer are comparatively low. Accordingly, for garden machines having cutting blades, the retaining system for fixing the cutting blades to the garden machine is a much more critical element for safe and reliable operation as compared to e.g. a string trimmer.

According to an embodiment of the first aspect, the at least one locking element includes at least one pawl, and the retaining feature comprises a plurality of ratchet teeth with which the at least one pawl releasably engages.

According to a further embodiment, the at least one pawl rotates about an axis which is parallel to a longitudinal axis of the cutting blade drive shaft, the at least one actuating element is arranged to translate in a radial direction relative to the longitudinal axis of the cutting blade drive shaft, and a radially-inward translation of the at least one actuating element causes a rotation of the at least one pawl to disengage from the plurality of ratchet teeth on the cutting drive shaft.

According to an embodiment of the first aspect, the at least one locking element includes at least one sliding plate which is arranged to translate in a direction perpendicular to a longitudinal axis of the cutting blade drive shaft, and the retaining feature comprises a circumferential groove into which the at least one sliding plate releasably engages.

According to a further embodiment, the at least one sliding plate is arranged to translate in a first radial direction relative to the longitudinal axis of the cutting blade drive shaft, the at least one actuating element is arranged to translate in a second radial direction relative to the longitudinal axis of the cutting blade drive shaft, and a radially-inward translation of the at least one actuating element causes a radially-outward translation of the at least one sliding plate to disengage from the circumferential groove on the cutting blade drive shaft.

According to a further embodiment, the at least one actuating element comprises a first surface and the at least one sliding plate comprises a second surface corresponding to the first surface, wherein a translation of the at least one actuating element causes the first surface to slide against the second surface to cause the translation of the at least one sliding plate.

According to a further embodiment, the retaining fastener includes two actuating elements arranged to translate in first opposing radial directions, each having two first surfaces, and two sliding plates arranged to translate in second opposing radial directions perpendicular to the first opposing radial directions, each having two second surfaces, wherein a radially-inward translation of one of the two actuating elements causes each first surface of the respective actuating element to slide against a second surface of one sliding plate and a second surface of the other sliding plate, causing a radially-outward translation of both of the two sliding plates, and wherein a radially-inward translation of the other one of the two actuating elements causes each first surface of the respective actuating element to slide against a second surface of one sliding plate and a second surface of the other sliding plate, causing a radially-outward translation of both of the two sliding plates.

According to a further embodiment, the at least one actuating element is coupled to the at least one sliding plate by at least one link element, wherein a translation of the at least one actuating element causes the translation of the at least one sliding plate via the link element.

According to a further embodiment, the retaining fastener includes two actuating elements arranged to translate in first opposing radial directions, two sliding plates arranged to translate in second opposing radial directions perpendicular to the first opposing radial directions, and four link elements coupling the two actuating elements and the two sliding plates, wherein a radially-inward translation of the two actuating elements causes a radially-outward translation of both sliding plates.

According to a further embodiment, the at least one sliding plate includes a leading chamfered surface configured for sliding against the cutting blade drive shaft, such that the at least one sliding plate translates radially-outward as the retaining fastener is fastened to the cutting blade drive shaft.

According to an embodiment of the first aspect, the retaining fastener further includes at least one biasing spring which biases the at least one locking element and/or the at least one actuating element into a state in which the at least one locking element is engaged with the retaining feature.

According to a second aspect of the present disclosure, a retaining system for fastening at least one cutting blade to a garden machine is provided. The retaining system includes a cutting blade drive shaft having a threaded portion and a retaining feature, a cutting blade support having at least one rotation fixture, the cutting blade support being configured for supporting the at least one cutting blade in a fixed position relative to the cutting blade drive shaft, and a retaining fastener according to the first aspect and embodiments of the present disclosure. Preferably, the retaining feature includes one of the group consisting of a plurality of ratchet teeth and a circumferential groove.

According to an embodiment of the second aspect, the blade support is removably mounted to the cutting blade drive shaft, and the blade support includes the threaded portion and the retaining feature to which the retaining fastener engages.

According to a third aspect of the present disclosure, a garden machine is provided. The garden machine includes at least one cutting blade, a motor configured for rotationally driving the at least one cutting blade, and the retaining system according to the second aspect and embodiments of the present disclosure. Preferably, the garden machine is one of the group consisting of a push lawn mower, a ride-on lawn mower, a robotic lawn mower, an edger or a brush cutter.

According to a fourth aspect of the present disclosure, a method for operating a retaining system according to the second aspect and embodiments of the present disclosure is provided. The method includes at least one of fastening the retaining fastener to the cutting blade drive shaft by threading the retaining fastener onto the threaded portion of the cutting blade drive shaft such that the at least one locking element engages with the retaining feature, and releasing the retaining fastener from the cutting blade drive shaft by actuating the at least one actuating element to cause a disengaging of the at least one locking element from the retaining feature and unthreading the retaining fastener from the threaded portion of the cutting blade drive shaft.

Further aspects, details and embodiments become apparent from the following description together with the figures and the dependent claims.

Aspects and embodiments of the present disclosure allow for retaining systems, in particularly retaining fasteners, to have improved ergonomics and usability. Further, reliability and durability improvements are exhibited by the retaining systems and retaining fasteners of the present disclosure, and may be manufactured at a lower cost.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- FIG. 1: shows a cross-sectional side view of a portion of a garden machine according to embodiments of the present disclosure;
- FIG. 2: shows a lower perspective view of a retaining system according to embodiments of the present disclosure;
- FIGS. 3A and 3B: show top views of a retaining fastener according to embodiments of the present disclosure;
- FIG. 4: shows a lower perspective view of a retaining system according to embodiments of the present disclosure;
- FIGS. 5A and 5B: show top views of a retaining fastener according to embodiments of the present invention; and
- FIGS. 6A and 6B: show top views of a retaining fastener according to embodiments of the present invention.

### DETAILED DESCRIPTION

Reference will now be made in detail to the various exemplary embodiments, one or more examples of which are illustrated in each figure. Each example is provided by way of explanation and is not meant as a limitation. For example, features illustrated or described as part of one embodiment can be used on or in conjunction with other embodiments to yield yet further embodiments. The intention is that the present disclosure includes such modifications and variations.

Within the following description of the drawings, the same reference numbers refer to same components. Only the differences with respect to the individual embodiments are described. The structures shown in the drawings are not necessarily depicted true to scale but rather serve the better understanding of the embodiments.

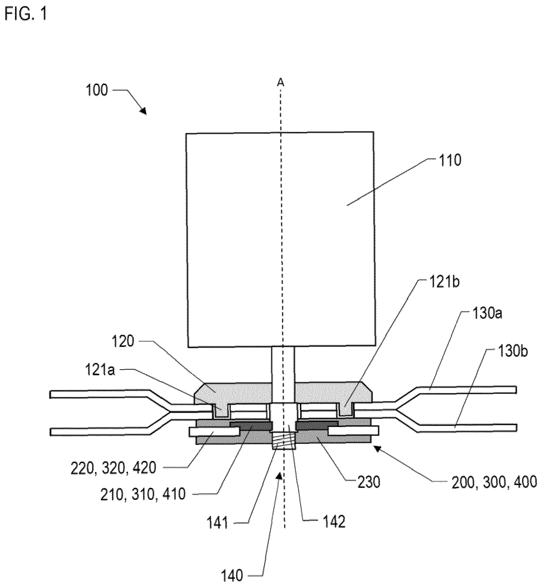

Reference will be made to Fig. 1, which shows a cross-sectional side view of a portion of a garden machine 100. The garden machine, particularly a garden machine for cutting grass or the like, is diagrammatically shown as having a motor 110 and cutting blades 130a, 130b. The motor 110 may include an electric motor, an internal combustion motor, or any suitable motive source for rotationally driving the cutting blades. For example, the motor 110 may be a dedicated motor directly connected to the cutting blades 130a, 130b and with the sole function of rotationally driving the cutting blades 130a, 130b, such as in a brush cutter. Alternatively, the motor 110 may be a drive motor which has other functions, such as propelling the garden machine in addition to rotationally driving the cutting blades 130a, 130b, such as in a ride-on lawn mower. Although two cutting blades 130a, 130b are exemplarily shown, the garden machine 100 of the present disclosure is not limited thereto, and any number of cutting blades may be attached to the garden machine 100. For example, a single cutting blade could be mounted to the garden machine, or a sandwich of cutting blades 130a, 130b can be mounted to the garden machine so that a specific configuration of cutting blades is provided, in order to optimize the cutting performance of the garden machine depending on the type of grass, cutting depths and cutting speed.

The cutting blades 130a, 130b are rotationally coupled to the motor 110 by a cutting blade drive shaft 140. Although the cutting blade drive shaft 140 is exemplarily illustrated as being directly connected between the motor 110 and the cutting blades 130a, 130b, the present disclosure is not limited thereto. The cutting blade drive shaft 140 may be, for example, an element of a drivetrain or transmission which operatively connects the cutting blades 130a, 130b to the motor 110. For example, the cutting blade drive shaft 140 may be provided with further transmission elements such as a gear, sprocket or belt pulley for connecting to the motor 110 via a drive transmission. Alternatively, the cutting blade drive shaft 140 may be the output shaft of the motor 110.

The cutting blades 130a, 130b are mounted to the cutting blade drive shaft 140 in a removable manner so that the cutting blades can be removed for sharpening, maintenance or replacement, or for changing the configuration of cutting blades. Accordingly, the cutting blades 130a, 130b are fastened to a cutting blade support 120 with a retaining fastener 200, 300, 400. The cutting blade support 120 may be integral to the cutting blade drive shaft 140, e.g. a flange or protrusion, or may be a separate part which is attached to the cutting blade drive shaft 140. The cutting blade drive shaft 140 includes a threaded portion 141 onto which a corresponding threaded portion of the retaining fastener 200, 300, 400 is engaged. Accordingly, the retaining fastener 200, 300, 400 is tightened onto the threaded portion 141 so that the retaining fastener 200, 300, 400 clamps the cutting blades 130a, 130b to the cutting blade support 120. The cutting blade support 120 further includes at least one rotation fixture 121a, 121b which prevents the cutting blades 130a, 130b from rotating with respect to the cutting blade support 120, and consequently with respect to the cutting blade drive shaft 140.

In conventional garden machines, the retaining fastener 200, 300, 400 consists of a simple hexagonal nut which is threaded onto the cutting blade drive shaft 140 so as to fix the cutting blades 130a, 130b to the cutting blade support 120. However, a conventional hexagonal nut cannot be sufficiently tightened by hand, and requires a tool to fasten the cutting blades 130a, 130b safely and reliably. In view thereof, the present invention relates to a retaining system, and particularly to the retaining fastener 200, 300, 400 itself, which can be tightened by hand without tools, and which includes various means for retaining the retaining fastener 200, 300, 400 so that unwanted loosening or detaching is avoided.

Additionally, the retaining fasteners 200, 300, 400 of the present disclosure provide improvements to ergonomics, reliability and durability, as the means for retaining the retaining fastener 200, 300, 400 is contained within a housing of the retaining fastener 200, 300, 400 itself. Accordingly, the outer circumference of the retaining fastener 200, 300, 400 is free from any locking elements or locking devices, and can be gripped by the user so that the retaining fastener 200, 300, 400 can be tightened. Further, the means for retaining the retaining fastener 200, 300, 400 is not arranged in the open in a challenging environment, e.g. beneath a lawn mower, reducing the chance of damage to the retaining means and reducing the chance of the retaining means tangling or catching on debris. Still further, the retaining feature 142 to which the retaining fastener 200, 300, 400 engages is arranged on the cutting blade drive shaft 140, reducing the number of components within the retaining fastener 200, 300, 400. Since the retaining fastener 200, 300, 400 is susceptible to being damaged or lost, the replacement cost of the retaining fastener 200, 300, 400 is reduced.. The present disclosure describes several embodiments of the retaining fastener 200, 300, 400 with these objectives in mind.

The cutting blade drive shaft 140 of the present disclosure includes a threaded portion 141 onto which the retaining fastener 200, 300, 400 engages. In addition to the threaded portion 141, the cutting blade drive shaft 140 includes an additional retaining feature 142 to which the retaining fastener 200, 300, 400 also engages. In contrast to the threaded portion 141, which allows the retaining fastener 200, 300, 400 to generate the required clamping force to secure the cutting blades 130a, 130b, the retaining feature 142 provides a feature to which the retaining fastener 200, 300, 400 engages so that the retaining fastener is retained on the cutting blade drive shaft 140. Particularly, where the retaining fastener 200, 300, 400 is engaged with the threaded portion 141 of the cutting blade drive shaft 140 by rotation in a fastening direction, the retaining fastener 200, 300, 400 is engaged with the retaining feature 142 so that rotation in a direction opposite to the fastening direction is physically limited or restricted. The retaining fastener 200, 300, 400 is further configured so as to be selectively engaged with the retaining feature 142 via corresponding locking elements, so that the user can simply unlock the retaining fastener 200, 300, 400, disengaging the retaining fastener 200, 300, 400 from the retaining feature 142, and remove the retaining fastener 200, 300, 400 from the cutting blade drive shaft 140.

According to an aspect of the present disclosure, a retaining system for fastening at least one cutting blade 130a, 130b to a garden machine 100 is provided. The system includes a cutting blade drive shaft 140 having a threaded portion 141 and a retaining feature 142, a cutting blade support 120 having at least one rotation fixture 121a, 121b, the cutting blade support 120 being configured for supporting the at least one cutting blade 130a, 130b in a fixed position relative to the cutting blade drive shaft 140, and a retaining fastener according to the aspects and embodiments of the present disclosure, which will be described more detail in the following.

Further, according to another aspect of the present disclosure, a garden machine 100 is provided. The garden machine 100 includes at least one cutting blade 130a, 130b, a motor 110 configured for rotationally driving the at least one cutting blade 130a, 130b, and the retaining system according to the aspects and embodiments of the present disclosure. The garden machine according to aspects and embodiments described herein is not limited to any specific garden machine; rather, the aspects and embodiments described herein are applicable to any garden machine having a rotating blade. Preferably, the garden machine is one of the group consisting of a push lawn mower, a ride-on lawn mower, a robotic lawn mower, an edger or a brush cutter.

Retaining fastener 200, 300, 400 is provided for releasably fastening the cutting blades 130a, 130b to the cutting blade drive shaft 140. Particularly, as exemplarily shown in Fig. 1, the retaining fastener 200, 300, 400 clamps the cutting blades 130a, 130b to the cutting blade support 120 by threading onto the threaded portion 141 of the cutting blade drive shaft 140. According to an aspect of the present disclosure, the retaining fastener 200, 300, 400 includes a housing 230 defining an inner volume, a threaded portion on the housing 230, the threaded portion being configured for engaging with the corresponding threaded portion 141 of the cutting blade drive shaft 140 by relative rotation of the retaining fastener in a fastening direction, at least one locking element 210, 310, 410 provided within the inner volume, the at least one locking element 210, 310, 410 being configured to releasably engage with the retaining feature 142 when the retaining fastener 200, 300, 400 is in a fastened state, limiting rotation of the retaining fastener 200, 300, 400 in the direction opposite to the fastening direction, and at least one actuation element 220, 320, 420 being coupled to the at least one locking element 210, 310, 410 such that the at least one locking element 210, 310, 410 can be disengaged from the retaining feature 142.

In the context of the present disclosure, the term "fastening direction" refers to the rotational direction in which the retaining fastener 200, 300, 400 is rotated about the longitudinal axis A of the cutting blade drive shaft 140, such that the respective threaded portions of the retaining fastener 200, 300, 400 and the cutting blade drive shaft engage and the retaining fastener 200, 300, 400 is engaged into a fastened state. Conversely, the term "direction opposite to the fastening direction" refers to he rotational direction in which the retaining fastener 200, 300, 400 is rotated about the longitudinal axis A of the cutting blade drive shaft 140 to release the retaining fastener 200, 300, 400 from the fastened state. The retaining fastener 200, 300, 400 according to the present disclosure is configured to block, limit or restrict rotation in the direction opposite to the fastening direction when in the fastened state, i.e. when the at least one locking element 210, 310, 410 is engaged with the retaining feature 142. The blocking, limiting or restricting of rotation may be achieved either directly, e.g. such that the at least one locking element 210, 310, 410 engages with the retaining feature 142 by respective contact in the circumferential direction, or may be achieved indirectly, e.g. such that the at least one locking element 210, 310, 410 engages with the retaining feature 142 by respective contact in the axial direction which indirectly leads to a blocking in the rotational direction due to the properties of the respective threaded portions. Further, the blocking, limiting or restricting of rotation may include some amount of rotation in the direction opposite to the fastening direction before the at least one locking element 210, 310, 410 fully engages with the retaining feature 142. However, in the case where some rotation is allowed, the engagement of the at least one locking element 210, 310, 410 is configured such that the retaining fastener 200, 300, 400 is retained in a way that, at a minimum, the detaching of the retaining fastener 200, 300, 400 and the cutting blades 130a, 130b from the garden machine is prevented.

The retaining fastener 200, 300, 400 has a housing 230 to which the respective components of the retaining fastener 200, 300, 400 are attached. The housing 230 is formed such that an inner volume is defined, and at least one locking element 210, 310, 410 is housed within said inner volume. For example, the housing 230 may comprise a cup-shaped lower housing and a lid-shaped upper housing. Alternatively, the housing 230 may comprise a cup-shaped lower housing only, such that when the retaining fastener 200, 300, 400 is attached to the garden machine in the fastened state, the cutting blades 130a, 130b or the cutting blade support 120 forms the lid-shaped upper housing. By housing the at least one locking element 210, 310, 410 within the inner volume, the at least one locking element is shielded from the hazardous environment around the cutting blades of the garden machine, and are protected from debris, flying rocks, being tangled, etc. Further, the protection provided by the housing 230 avoids the build-up of dirt and dust on the at least one locking element 210, 310, 410 and the retaining feature 142 to which said locking element engages, so that when the user wishes to operate the retaining fastener 200, 300, 400 the mechanism inside functions as expected without being blocked or without additional resistance from built-up debris. Accordingly, the retaining fastener 200, 300, 400 provides improvements in reliability, durability and user operability.

The housing 230 further includes a threaded portion which corresponds to the threaded portion 141 on the cutting blade drive shaft 140. The threaded portion provided in the housing 230 may be formed integrally to the housing 230, e.g. by machining the threaded portion directly into the housing, or may be provided as an insert component which is captively mounted to the housing 230. For example, the housing 230 may be manufactured from a lightweight metal, particularly aluminium, or from a plastic, particularly a thermoplastic, and the threaded portion may be provided by an insert with a thread formed therein, such as a threaded captive nut.

The outer surface of the housing 230 is intended to be gripped by the user to facilitate tightening of the retaining fastener 200, 300, 400 to the garden machine. By providing the at least one locking element 210, 310, 410 within the inner volume of the housing 230, the outer surface of the housing is more accessible to the user and the outer circumference of the housing 230 can be gripped easily. Accordingly, without a locking element or other feature on the outer surface, the user can apply more torque to the retaining fastener 200, 300, 400 and ergonomics are improved. Optionally, the outer circumference of the housing 230 can be provided with grip-enhancing features to further improve the ergonomics and user-operability. The retaining fastener 200, 300, 400 may further include a contoured surface on an outer circumference of the housing 230 which is shaped to provide a gripping surface.

The retaining fastener 230 further includes at least one actuating element 220, 320, 420 which is coupled to the at least one locking element 210, 310, 410. The at least one actuating element 220, 320, 420 is actuated by the user for disengaging the at least one locking element 210, 310, 410 within the housing 230 from the retaining feature 142, so that the retaining fastener can be released. Preferably, the at least one actuating element 220, 320, 420 is configured to extend from the inner volume to an outside of the housing 230. For example, the at least one actuating element 220, 320, 420 could be in the shape of a button or lever which the user can depress to disengage the at least one locking element 210, 310, 410. Alternatively, the at least one actuating element 220, 320, 420 could be accessible via a hole or cutout in the housing 230.

According to the present disclosure, the at least one locking element 210, 310, 410 and the at least one actuating element 220, 320, 420 are separate components which are operatively coupled together. Accordingly, the direction of movement of the at least one actuating element can be arranged substantially independently of the direction of movement of the at least one locking element 210, 310, 410 so that a favourable and intuitive movement of the at least one actuating element 220, 320, 420 and/or mechanical advantage is provided. For example, it may be advantageous in terms of ergonomics and user operability for the at least one actuating element 220, 320, 420 to move in a radial direction so that the user can disengage the retaining fastener 200, 300, 400 with a "squeezing" action, and this "squeezing" action may be the same action as gripping the housing 230 of the retaining fastener 200, 300, 400 for unthreading.

Further, by having the at least one locking element 210, 310, 410 and the at least one actuating element 220, 320, 420 as separate components, the material of each respective component can be optimally selected. For example, for high durability and reliable engagement with the retaining feature 142, the at least one locking element 210, 310, 410 can be made from a metal, and the at least one actuating element 220, 320, 420 can be made from a plastic, particularly a thermoplastic, so that it may be ergonomically formed, lightweight and low cost. Lightweight construction is desirable so that rotating mass can be reduced, which has positive effects on energy consumption and dynamic load reduction.

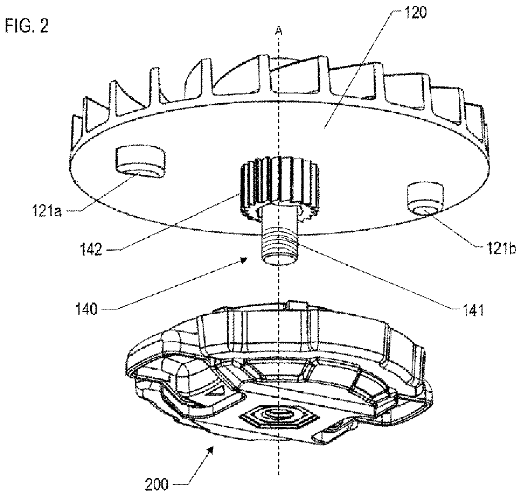

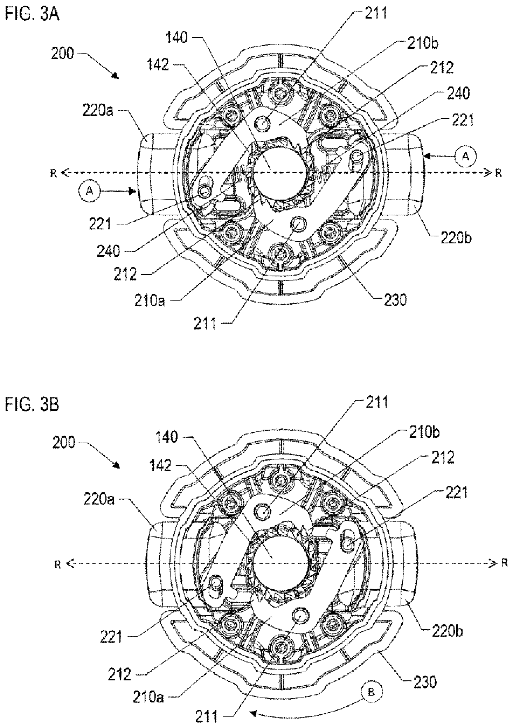

A first preferred embodiment will now be described, in which the retaining fastener uses a ratchet-type mechanism to engage the retaining fastener to the cutting blade drive shaft. Referring to the retaining system exemplarily shown in Fig. 2, and to the retaining fastener 200 shown in Figs. 3a and 3b, the retaining system includes the cutting blade drive shaft 140 having the threaded portion 141 to which the retaining fastener 200 engages, as in the general embodiment. However, in the first preferred embodiment, the retaining feature 142 includes a plurality of ratchet teeth which are fixed with respect to the cutting blade drive shaft 140. The plurality of ratchet teeth may be an integral part of the cutting blade drive shaft 140, e.g. formed by machining, casting or forging, may be an integral part of the cutting blade support 120, or may be provided as a separate component which is fixed to the cutting blade drive shaft 140 or to the cutting blade support 120. According to an embodiment, which may be combined with other embodiments described herein, the at least one locking element 210 includes at least one pawl 210a, 210b, and the retaining feature 142 comprises a plurality of ratchet teeth with which the at least one pawl releasably engages.

Reference will be made to Figs. 3a and 3b, which shows the retaining fastener 200 according to the first preferred embodiment. Fig. 3a shows the retaining fastener 200 in an engaged state, where the locking elements are engaged with the plurality of ratchet teeth, and Fig. 3b shows the retaining fastener 200 in a disengaged state, where the locking elements are disengaged from the plurality of ratchet teeth. As indicated by action A in Fig. 3a, the actuating elements of the retaining fastener 200 can be actuated by the user to unlock the retaining fastener 200, and once the retaining fastener 200 is disengaged as in Fig. 3b, the user may unthread the released retaining fastener 200 by rotating as indicated by action B.

The retaining fastener 200 is configured to selectively engage with the plurality of ratchet teeth which constitute the retaining feature 142 with at least one locking element 210 which are in the form of at least one pawl 210a, 210b. The illustrated retaining fastener 200 includes two pawls 210a, 210b for engaging with the plurality of ratchet teeth; however, the present disclosure is not limited thereto, and any number of pawls may be provided. Each pawl includes at least one pawl tooth 212 which engages with the corresponding ratchet teeth of the retaining feature 142 such that the retaining fastener is restricted from rotating in a direction opposite to the fastening direction.

The at least one pawl 210a, 210b includes at least one tooth 212 which corresponds to the plurality of ratchet teeth. The at least one tooth 212 is shaped in the typical manner known in the art so that the at least one pawl 210a, 210b provides a oneway blocking, limiting or restricting effect when engaging with the plurality of ratchet teeth. In other words, the at least one tooth 212 is shaped so that when the retaining fastener 200 is rotated in the fastening direction, the at least one pawl 210a, 210b skips over the plurality of ratchet teeth, and when the retaining fastener is rotated in the direction opposite to the fastening direction, the at least one pawl 210a, 210b blocks said rotation by engaging with the plurality of ratchet teeth.

Further, since the plurality of ratchet teeth extend in the longitudinal axis A along the cutting blade drive shaft 140, and since the corresponding pawls 210a, 210b can engage with the plurality of ratchet teeth anywhere along their respective lengths, the retaining fastener 200 can be retained in a variable axial position relative to the cutting blade support 120. Accordingly, the retaining fastener 200 will still be retained on the cutting blade drive shaft 140 even with differing thicknesses of cutting blades, or with differing numbers of sandwiched cutting blades.

Optionally, the retaining fastener 200 may be provided with at least one biasing spring 240. Particularly, the number of biasing springs 240 may be the same as the number of pawls 210a, 210b. The biasing spring 240 acts on one of the pawl 210a, 210b and the actuating element 220a, 220b so that the pawl 210a, 210b is biased towards the engaged position where the pawl 210a, 210b is engaged with the ratchet teeth.

The at least one pawl 210a, 210b further includes a rotation axis 211 about which the pawl 210a, 210b rotates. The rotation axis 211 may be a pin feature formed integrally to the pawl 210a, 210b, a pin feature formed integrally to the housing 230, or a separate pin about which the pawl 210a, 210b rotates. The rotation axis 211 may be parallel to the longitudinal axis A of the cutting blade drive shaft 140. The pawls 210a, 210b is further coupled to the respective actuating elements 220a, 220b so that actuation of the actuating elements 220a, 220b by the user causes the pawls 210a, 210b to disengage from the plurality of ratchet teeth. As exemplarily shown in the figures, the coupling between the pawls 210a, 210b and the actuating elements 220a, 220b includes a pin 221 in a slot, so that a translation motion of the actuating elements 220a, 220b causes a rotational movement of the pawl 210a, 210b.

As shown in the figures, the first preferred embodiment includes two pawls 210a, 210b and two corresponding actuating elements 220a, 220b. According to an embodiment, which may be combined with other embodiments described herein, the at least one pawl 210a, 210b rotates about an axis 211 which is parallel to a longitudinal axis A of the cutting blade drive shaft 140, the at least one actuating element 220a, 220b is arranged to translate in a radial direction R relative to the longitudinal axis A of the cutting blade drive shaft 140, and a radially-inward translation of the at least one actuating element 220a, 220b causes a rotation of the at least one pawl 210a, 210b to disengage from the plurality of ratchet teeth on the cutting blade drive shaft 140. By providing two actuating elements 220a, 220b with radial translation movement, the ergonomics and user operability are improved as the user is only required to grip the retaining fastener 200 which simultaneously unlocks the retaining fastener 200, allowing the user to rotate and unthread the retaining fastener 200 with one gripping motion.

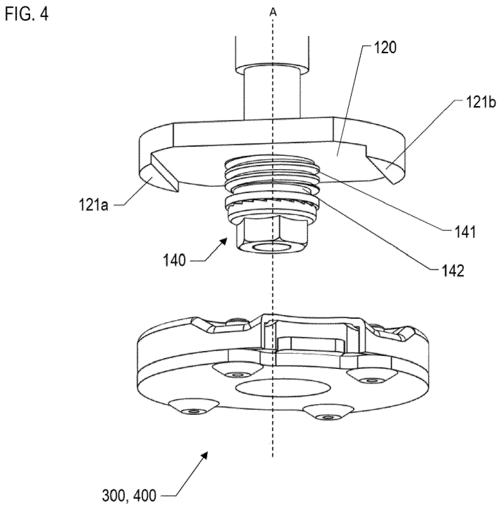

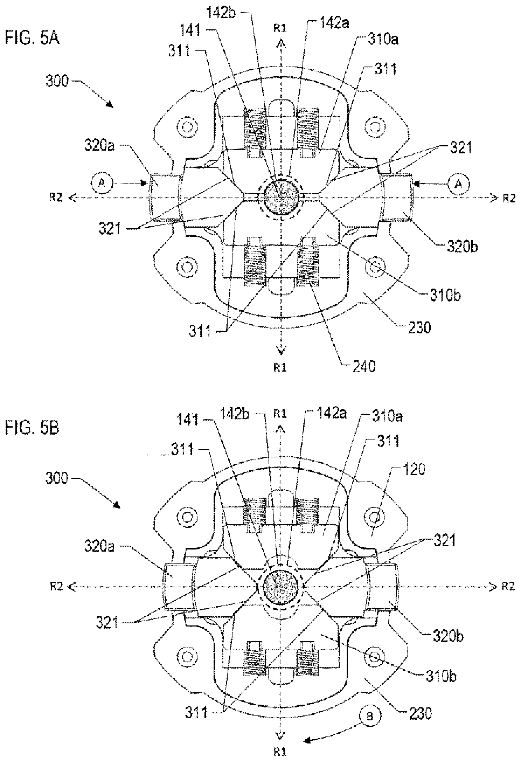

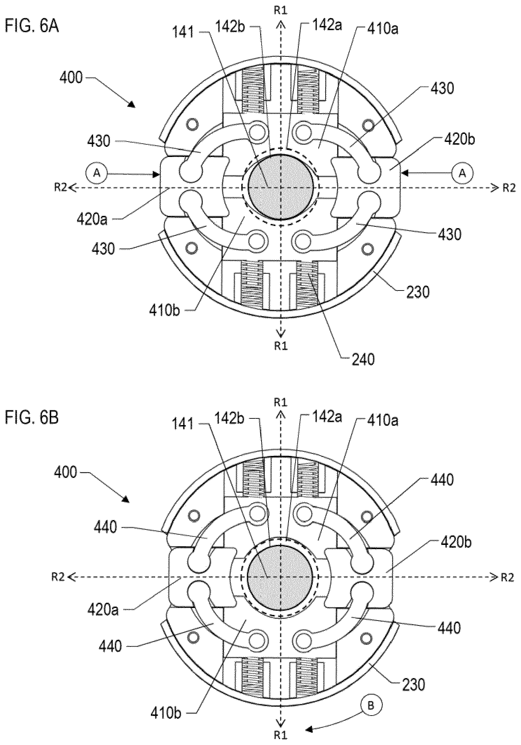

Second and third preferred embodiments will now be described, in which the retaining fastener uses a sliding plate and groove type mechanism to engage the retaining fastener to the cutting blade drive shaft. Referring to the retaining system exemplarily shown in Fig. 4, and to the retaining fastener 200, 300 shown in Figs. 5a-5b and 6a-6b, the retaining system includes the cutting blade drive shaft 140 having the threaded portion 141 to which the retaining fastener 200 engages, as in the general embodiment. However, in the second and third preferred embodiments, the retaining feature 142 includes a circumferential groove formed in the circumferential direction about the longitudinal axis A of the cutting blade drive shaft 140. The circumferential groove may be integrally formed in the cutting blade drive shaft 140, or may alternatively be formed in the cutting blade support 120 as exemplarily shown. The retaining fastener 300, 400 according to the second and third preferred embodiments include at least one sliding plate which is configured to selectively engage with the circumferential groove to retain the retaining fastener 300, 400. According to an embodiment, which may be combined with other embodiments described herein, the at least one locking element 210 includes at least one sliding plate 310a, 310b, 410a, 410b which is arranged to translate in a direction perpendicular to the longitudinal axis A of the cutting blade drive shaft 140, and the retaining feature 142 comprises a circumferential groove into which the at least one sliding plate releasably engages.

According to an embodiment which may be combined with other embodiments described herein, the at least one sliding plate 310a, 310b, 410a, 410b is arranged to translate in a first radial direction R1 relative to the longitudinal axis A of the cutting blade drive shaft 140 and the at least one actuating element 320a, 320b, 420a, 420b is arranged to translate in a second radial direction R2 relative to the longitudinal axis A of the cutting blade drive shaft 140. The radially-inward translation of the at least one actuating element 320a, 320b, 420a, 420b causes a radially-outward translation of the at least one sliding plate 310a, 310b, 410a, 410b to disengage from the circumferential groove on the cutting blade drive shaft 140. The radial translational movement of the at least one actuating element 320a, 320b, 420a, 420b offer similar improvements in ergonomics and user operability as with the first preferred embodiment.

Reference will be made to Figs. 5a and 5b, which shows the retaining fastener 300 according to the second preferred embodiment. In these figures, the circumferential groove is illustrated with a dashed line indicating the upper surface 142a in which the circumferential groove is formed, and a solid line indicating the base surface 142b of the circumferential groove. Fig. 5a shows the retaining fastener 300 in an engaged state, where the sliding plates are engaged with the circumferential groove, i.e. within the bounds of the upper surface 142a, and Fig. 5b shows the retaining fastener 300 in a disengaged state, where the sliding plates are disengaged from the circumferential groove, i.e. outside the bounds of the upper surface 142a. As indicated by action A in Fig. 5a, the actuating elements of the retaining fastener 300 can be actuated by the user to unlock the retaining fastener 300, and once the retaining fastener 300 is disengaged as in Fig. 5b, the user may unthread the released retaining fastener 300 by rotating as indicated by action B.

In the second preferred embodiment, the coupling of the at least one sliding plate 310a, 310b and the at least one actuating element 320a, 320b is realized by corresponding surfaces which slide against each other. As exemplarily shown, the at least one actuating element 320a, 320b includes a first surface 311 and the at least one sliding plate 310a, 310b includes a second surface 311 corresponding to the first surface 321. The respective first surface 321 and second surface 311 butt up against each other but are configured to slide against each other, so that translational movement of the actuating element 320a, 320b causes a corresponding translational movement of the sliding plate 310a, 310b. The respective angles of the first surfaces 321 and the second surfaces 311 are exemplarily shown as being at 45 degrees to the respective directions of translation R1 and R2, however this angle may be adjusted so that mechanical advantage can be provided, so that the force required by the user to disengage the sliding plate 310a, 310b from the circumferential groove can be reduced. Further, the sliding surface coupling exhibited by the second preferred embodiment results in a simpler retaining mechanism which is cheaper to produce and simple to maintain.

The first surfaces 321 and second surfaces 311 are exemplarily shown as being external flat surfaces of the respective sliding plates in the retaining fastener 300. Accordingly, movement between the actuating element 320a, 320b and the sliding plate 310a, 310b may only be coupled in one direction. However, the present disclosure is not limited thereto, and the first surfaces 321 may comprise internal surfaces or curved surfaces. For example, the first surface 321 of the actuating element 320a, 320b may be an angled, slotted hole, and the second surface 311 of the sliding plate 310a, 310b may be a protrusion which slides within the slotted hole. Accordingly, the respective surfaces may be configured to couple movement in both directions.

Optionally, the retaining fastener 300 may be provided with at least one biasing spring 240. Particularly, the number of biasing springs 240 may be the same as the number of sliding plates 310a, 310b, or may be a multiple of the number of sliding plates 310a, 310b. The biasing spring 240 acts on the sliding plates 310a, 310b and, via the sliding contact between first surfaces 321 and second surfaces 311, the actuating element 220a, 220b so that the sliding plate 310a, 310b is biased towards the engaged position where the sliding plate 310a, 310b is engaged with the circumferential groove.

As exemplarily shown in the figures, the second preferred embodiment includes two sliding plates 310a, 310b and two corresponding actuating elements 320a, 320b. According to an embodiment, which may be combined with other embodiments described herein, the two actuating elements 320a, 320b are arranged to translate in first opposing radial directions R1 and each include two first surfaces 321, and the two sliding plates 310a, 310b are arranged to translate in second opposing radial directions R1 and each include two second surfaces 311. A radially-inward translation of one of the two actuating elements 320a causes each first surface 321 of the respective actuating element 320a to slide against a second surface 311 of one sliding plate 310a and a second surface 311 of the other sliding plate 310b, causing a radially-outward translation of the two sliding plates. Similarly, a radially-inward translation of the other one of the two actuating elements 320b causes each first surface 321 of the respective actuating element 320b to slide against a second surface 311 of one sliding plate 310a and a second surface 311 of the other sliding plate 310b. By providing two actuating elements 220a, 220b with radial translation movement, the ergonomics and user operability are improved as the user is only required to grip the retaining fastener 200 which simultaneously unlocks the retaining fastener 200, allowing the user to rotate and unthread the retaining fastener 200 with one gripping motion.

Reference will be made to Figs. 6a and 6b, which shows the retaining fastener 400 according to the third preferred embodiment. In these figures, the circumferential groove is illustrated with a dashed line indicating the upper surface 142a in which the circumferential groove is formed, and a solid line indicating the base surface 142b of the circumferential groove. Fig. 6a shows the retaining fastener 400 in an engaged state, where the sliding plates are engaged with the circumferential groove, i.e. within the bounds of the upper surface 142a, and Fig. 5b shows the retaining fastener 400 in a disengaged state, where the sliding plates are disengaged from the circumferential groove, i.e. outside the bounds of the upper surface 142a. As indicated by action A in Fig. 6a, the actuating elements of the retaining fastener 400 can be actuated by the user to unlock the retaining fastener 400, and once the retaining fastener 400 is disengaged as in Fig. 6b, the user may unthread the released retaining fastener 400 by rotating as indicated by action B.

The third preferred embodiment illustrated in Figs. 6a and 6b is conceptually similar to the second preferred embodiment illustrated in Figs. 5a and 5b, with the addition of at least one link element 440 which is provided to couple the at least one sliding plate 410a, 410b and the at least one actuating element 420a, 420b. By providing the additional link element 440, the coupling between the sliding plate 410a, 410b and the actuating element 420a, 420b, further ergonomic and user operability improvements can be achieved. The unlocking mechanism of the retaining fastener 400 can be made more robust with a more direct coupling, and any resistance caused by friction can be reduced as compared to the second preferred embodiment. Further, the link element 440 allows for a non-linear mechanical advantage between the actuating element 420a, 420b and the sliding plate 410a, 410b, which may be particularly advantageous in the case where at least one biasing spring 240 is provided, as the increasing force due to spring displacement can be compensated with a small increase in mechanical advantage.

As exemplarily shown in the figures, the third preferred embodiment includes two sliding plates 410a, 410b, two actuating elements 420a, 420b and four link elements 440 coupling the two actuating elements 420a, 420b and the two sliding plates 410a, 410b. Particularly, the four link elements 440 are arranged to form a diamond-shaped linkage between the respective actuating elements 420a, 420b and the sliding plates 410a, 410b. Similar to the second preferred embodiment, the two actuating elements 420a, 420b are arranged to translate in first opposing radial directions R1 and the two sliding plates 410a, 410b are arranged to translate in second opposing radial directions R2 perpendicular to the first opposing radial directions R1.

For the second and third preferred embodiments, which include a sliding plate 310a, 310b, 410a, 410b as the respective locking elements 310, 410, the sliding plates 310a, 310b, 410a, 410b may optionally be provided with a leading chamfered surface so that the retaining fastener 300, 400 is easier to fasten to the cutting blade drive shaft 140. Said chamfer may be provided on the edge of the sliding plate which faces the cutting blades so that, as the user threads the retaining fastener 300, 400 onto the cutting blade drive shaft 140, the chamfered surface slides on the cutting blade drive shaft 140 and automatically retracts the sliding plate. Accordingly, the user would no longer be required to manually retract the sliding plates 3 10a, 3 10b, 410a, 410b so that the retaining fastener can be mounted. As a further modification, the cutting blade drive shaft 140 may also be provided with a corresponding chamfered surface on its leading edge for the sliding plate 310a, 310b, 410a, 410b to slide against.

Referring once again to Figs. 2 and 4, which show different embodiments of the retaining system according to a ratchet-type (Fig. 2) and a circumferential groove-type (Fig. 4), further modifications of the retaining system can be seen. Although the description of the threaded portion 141 and the retaining feature 142 (either as a plurality of ratchet teeth or as a circumferential groove) are typically described as being the threaded portion 141 and the retaining feature 142 of the cutting blade drive shaft 140, this does not limit these features as being integral features of the cutting blade drive shaft 140 itself. Rather, the threaded portion 141 and the retaining feature 142 may be arranged or provided in any form so long as said features are fixed with respect to the cutting blade drive shaft 140 and, accordingly, the retaining fastener 200, 300, 400 can be attached thereto by engaging with the threaded portion 141 and the retaining feature 142.

For example, the retaining system of the ratchet-type shown in Fig. 2 is exemplarily shown as having a threaded portion 141 formed integrally into the end of the cutting blade drive shaft 140, and the plurality of ratchet teeth are provided on a sleevelike component which is mounted to the cutting blade drive shaft 140. The threaded portion 141 is at the more distal end of the cutting blade drive shaft 140 in relation to the cutting blade support 120. As another example, the retaining system of the circumferential groove-type shown in Fig. 4 is exemplarily shown as having the threaded portion 141 and the circumferential groove formed integrally into the cutting blade support 120. The cutting blade drive shaft 140 includes a different threaded portion to which a hex nut is attached, thereby fixing the cutting blade support 120 thereon. Further, the retaining feature 142, i.e. the circumferential groove, is at the more distal end of the cutting blade drive shaft 140 in relation to the cutting blade support 120.

As evidenced by the exemplary embodiments, the configuration of the cutting blade drive shaft 140, the threaded portion 141 and the retaining feature 142 is flexible. Moreover, in the case where one or both of the threaded portion 141 and the retaining feature 142 is included as a separate component which is attached to the cutting blade drive shaft 140, further advantages are exhibited, such as simple and low-cost replacement in case of damage and flexibility in terms of material selection. Further, the positions of the respective elements could be adapted to a different cutting blade standard to allow for upgrades or crossgrades to new or alternative blade designs without requiring modification of the cutting blade drive shaft 140 or the retaining fastener 200, 300, 400.

According to a fourth aspect of the present disclosure, a method for operating a retaining system according to the second aspect and embodiments of the present disclosure is provided. The method according to this aspect relates particularly to the operation of the retaining fastener 200, 300, 400 by a user, and includes at least one step of fastening the retaining fastener 200, 300, 400 and releasing the retaining fastener 200, 300, 400. Particularly, the fastening of the retaining fastener 200, 300, 400 to the cutting blade drive shaft 140 includes threading the retaining fastener 200, 300, 400 onto the threaded portion 141 of the cutting blade drive shaft 140 such that the at least one locking element 210, 310, 410 engages with the retaining feature 142. Further particularly, the releasing of the retaining fastener 200, 300, 400 from the cutting blade drive shaft 140 includes actuating the at least one actuating element 220, 320, 420 to cause a disengaging of the at least one locking element 210, 310, 410 from the retaining feature 142 and unthreading the retaining fastener 200, 300, 400 from the threaded portion of the cutting blade drive shaft 140.

According to the respective method steps of fastening and/or releasing the retaining fastener 200, 300, 400, the method may preferably include that the user grips the retaining fastener 200, 300, 400 such that the at least one actuating element 220, 320, 420 is actuated and, with the same gripping action, rotating the retaining fastener 200, 300, 400 about the longitudinal axis A of the cutting blade drive shaft 140. The embodiments of the retaining fastener 200, 300, 400 described in the present disclosure allow for the user to perform the unlocking and the rotating of the retaining fastener 200, 300, 400 with the same gripping action, which improves ergonomics and user operability of the retaining fastener 200, 300, 400 and subsequently the retaining system.

While the foregoing is directed to some embodiments, other and further embodiments may be devised without departing from the basic scope thereof, and the scope thereof is determined by the claims that follow.

## Claims

1. A retaining fastener (200, 300, 400) for fastening at least one cutting blade (130a, 130b) to a cutting blade drive shaft (140) comprising a threaded portion (141) and a retaining feature (142), the retaining fastener (200, 300, 400) comprising:
a housing (230) defining an inner volume;
a threaded portion provided on the housing (230), the threaded portion being configured for engaging with the corresponding threaded portion (141) of the cutting blade drive shaft (140) by relative rotation of the retaining fastener (200, 300, 400) in a fastening direction;
at least one locking element (210, 310, 410) provided within the inner volume, the at least one locking element (210, 310, 410) being configured to releasably engage with the retaining feature (142) when the retaining fastener (200, 300, 400) is in a fastened state, limiting rotation of the retaining fastener (200, 300, 400) in the direction opposite to the fastening direction; and
at least one actuation element (220, 320, 420) being coupled to the at least one locking element (210, 310, 410) such that the at least one locking element (210, 310, 410) can be disengaged from the retaining feature (142).

2. The retaining fastener (200) according to claim 1, wherein the at least one locking element (210) comprises at least one pawl (210a, 210b), and the retaining feature (142) comprises a plurality of ratchet teeth with which the at least one pawl (210a, 210b) releasably engages.

3. The retaining fastener (200) according to claim 2, wherein
the at least one pawl (210a, 210b) rotates about an axis (211) which is parallel to a longitudinal axis (A) of the cutting blade drive shaft (140);
the at least one actuating element (220a, 220b) is arranged to translate in a radial direction (R) relative to the longitudinal axis (A) of the cutting blade drive shaft (140), and
a radially-inward translation of the at least one actuating element (220a, 220b) causes a rotation of the at least one pawl (210a, 210b) to disengage from the plurality of ratchet teeth on the cutting blade drive shaft (140).

4. The retaining fastener (300, 400) according to claim 1, wherein the at least one locking element (310, 410) comprises at least one sliding plate (310a, 310b, 410a, 410b) which is arranged to translate in a direction perpendicular to a longitudinal axis (A) of the cutting blade drive shaft (140), and the retaining feature (142) comprises a circumferential groove into which the at least one sliding plate (310a, 310b, 410a, 410b) releasably engages.

5. The retaining fastener (300, 400) according to claim 4, wherein
the at least one sliding plate (310a, 310b, 410a, 410b) is arranged to translate in a first radial direction (R1) relative to the longitudinal axis (A) of the cutting blade drive shaft (140),
the at least one actuating element (320a, 320b, 420a, 420b) is arranged to translate in a second radial direction (R2) relative to the longitudinal axis (A) of the cutting blade drive shaft (140), and
a radially-inward translation of the at least one actuating element (320a, 320b, 420a, 420b) causes a radially-outward translation of the at least one sliding plate (310a, 310b, 410a, 410b) to disengage from the circumferential groove on the cutting blade drive shaft (140).

6. The retaining fastener (300) according to any one of claims 4 to 5, wherein the at least one actuating element (320a, 320b) comprises a first surface (321) and the at least one sliding plate (310a, 310b) comprises a second surface (311) corresponding to the first surface (321), wherein a translation of the at least one actuating element (320a, 320b) causes the first surface (321) to slide against the second surface (311) to cause the translation of the at least one sliding plate (310a, 310b).

7. The retaining fastener (300) according to claim 6 comprising:
two actuating elements (320a, 320b) arranged to translate in first opposing radial directions (R1), each comprising two first surfaces (321); and
two sliding plates (310a, 310b) arranged to translate in second opposing radial directions (R2) perpendicular to the first opposing radial directions (R1), each comprising two second surfaces (311),
wherein a radially-inward translation of one of the two actuating elements (320a) causes each first surface (321) of the respective actuating element (320a) to slide against a second surface (311) of one sliding plate (310a) and a second surface (311) of the other sliding plate (310b), causing a radially-outward translation of both of the two sliding plates (310a, 310b), and
wherein a radially-inward translation of the other one of the two actuating elements (320b) causes each first surface (321) of the actuating element (320b) to slide against a second surface (311) of one sliding plate (310a) and a second surface (311) of the other sliding plate (310b), causing a radially-outward translation of both of the two sliding plates (310a, 310b).

8. The retaining fastener (400) according to any one of claims 4 to 5, wherein the at least one actuating element (420a, 420b) is coupled to the at least one sliding plate (410a, 410b) by at least one link element (440), wherein a translation of the at least one actuating element (420a, 420b) causes the translation of the at least one sliding plate (410a, 410b) via the link element (440).

9. The retaining fastener (400) according to claim 8, comprising:
two actuating elements (420a, 420b) arranged to translate in first opposing radial directions (R1);
two sliding plates (410a, 410b) arranged to translate in second opposing radial directions (R2) perpendicular to the first opposing radial directions (R1); and
four link elements (440) coupling the two actuating elements (420a, 420b) and the two sliding plates (410a, 410b),
wherein a radially-inward translation of the two actuating elements (420a, 420b) causes a radially-outward translation of both sliding plates (410a, 410b).

10. The retaining fastener (300, 400) according to any one of claims 4 to 9, wherein the at least one sliding plate (310a, 310b, 410a, 410b) comprises a leading chamfered surface, and optionally the cutting blade drive shaft (140) comprises a corresponding chamfered surface, such that the at least one sliding plate (310a, 310b, 410a, 410b) translates radially-outward as the retaining fastener (300, 400) is fastened to the cutting blade drive shaft (140).

11. The retaining fastener (200, 300, 400) according to any one of claims 1 to 10, further comprising at least one biasing spring (240) which biases the at least one locking element (210, 310, 410) and/or the at least one actuating element (220, 320, 420) into a state in which the at least one locking element (210, 310, 410) is engaged with the retaining feature (142).

12. A retaining system for fastening at least one cutting blade (130a, 130b) to a garden machine, the system comprising:
a cutting blade drive shaft (140) comprising a threaded portion (141) and a retaining feature (142);
a cutting blade support (120) comprising at least one rotation fixture (121a, 121b), the cutting blade support being configured for supporting the at least one cutting blade (130a, 130b) in a fixed position relative to the cutting blade drive shaft (140); and
a retaining fastener according to any one of claims 1 to 11,
preferably wherein the retaining feature (142) comprises one of the group consisting of a plurality of ratchet teeth and a circumferential groove.

13. The retaining system according to claim 12, wherein the blade support (120) is removably mounted to the cutting blade drive shaft (140), and the blade support (120) comprises the threaded portion (141) and the retaining feature (142) to which the retaining fastener engages.

14. A garden machine (100) comprising:
at least one cutting blade (130a, 130b);
a motor (110) configured for rotationally driving the at least one cutting blade (130a, 130b); and
the retaining system according to any one of claims 12 and 13,
preferably wherein the garden machine is one of the group consisting of a push lawn mower, a ride-on lawn mower, a robotic lawn mower, an edger or a brush cutter.

15. Method for operating a retaining system according to any one of claims 12 and 13, the method comprising at least one of:
fastening the retaining fastener (200, 300, 400) to the cutting blade drive shaft (140) by threading the retaining fastener (200, 300, 400) onto the threaded portion (141) of the cutting blade drive shaft (140) such that the at least one locking element (210, 310, 410) engages with the retaining feature (142); and/or
releasing the retaining fastener (200, 300, 400) from the cutting blade drive shaft (140) by actuating the at least one actuating element (220, 320, 420) to cause a disengaging of the at least one locking element (210, 310, 410) from the retaining feature (142), and unthreading the retaining fastener (200, 300, 400) from the threaded portion (141) of the cutting blade drive shaft (140).
